# EUROPEAN PATENT SPECIFICATION

(11) **EP 2 139 278 B1**
(45) Date of publication and mention of the grant of the patent: **14.03.2012**
(21) Application number: 08290488.9
(22) Date of filing: 28.05.2008
(51) Int. Cl.: H04W 24/08

(54) **Method of detecting an outage of a radio cell**
Verfahren zum Erkennen eines Funkzellenausfalls
Procédé de détection d'interruption d'une cellule radio

(43) Date of publication of application: 30.12.2009
(73) Proprietor: Alcatel Lucent, 75007 Paris (FR)
(72) Inventor: Bakker, Hajo, Dipl.-Ing., 71735 Eberdingen (DE); Weber, Andreas, Dr.-Ing., 74251 Lehrensteinsfeld (DE); Kaminski, Stephen, Dipl.-Ing. (BA), 73054 Eislingen (DE)
(74) Representative: Schmidt, Werner Karl

(56) References cited:
- EP-A- 1 638 253
- WO-A-01/45276
- GB-A- 2 277 234
- GB-A- 2 280 570
- US-A1- 2006 221 886

## Description

The present invention relates to a method of detecting an outage of a radio cell, and a base station to execute said method.

The 3GPP Technical Specification TS 36.300 V8.4.0 (2008-03) "Evolved Universal Terrestrial Radio Access (E-UTRA) and Evolved Universal Terrestrial Radio Access Network (E-UTRAN)" Stage 2 (Release 8) gives an overview over a current state of a mobile telecommunication architecture based on UMTS (3GPP = 3rd Generation Partnership Project; UMTS = Universal Mobile Telecommunication System).

A cell outage, i.e. one or more malfunctioning radio cells of a base station, e.g. a LTE eNB, may be detected by the base station associated with the affected radio cell by internal surveillance of processing boards and RF components of the base station (LTE = Long Term Evolution; eNB = E-UTRAN Node B; RF = radio frequency). However, the cell outage will not be detected in any case by an Operations & Maintenance Centre (OMC) associated with the base station because only the affected base station sends an error message related to the cell outage, also called cell outage message, to the OMC.

In case several cell outage messages arrive at the same time at the OMC, some of these cell outage messages may not be processed immediately. In case of a total outage of the base station, e.g. due to an electrical power outage, the corresponding error message might not even be generated. Moreover, the service staff at the OMC often only reacts to a cell outage based on fault reports initiated by subscribers of the radio service. Such a fault report may comprise an indication that there is no service in specific area.

It has to be distinguished whether a cell outage occurs during a "high" traffic situation, i.e. when many mobile terminals (= UEs) are affected, or during a "low" traffic situation (UE = user equipment). In the first case, all UEs in the affected radio cell will contemporaneously try to access surrounding radio cells, while in the second case, e.g. at night, a detection of a cell outage is more complex as no or only a limited number of UEs are active.

US 2006/0221886 A1 describes a wireless communication system including the ability to determine that a fault condition associated with at least a portion of a cell associated with a base station is likely. Disclosed examples include using information regarding call activity levels of various portions of a cell for determining an expected call activity level for at least one portion of the cell. One example includes using the least active portion of the cell as the portion of interest. Previously observed activity levels provide information to automatically determine an expected relationship between the activity levels of the portions of the cell. Disclosed examples include determining whether a deviation between the actual call activity level and the expected call activity level is statistically significant enough to indicate a fault condition with at least the portion of the cell, which is of interest.

WO 01/45276 A2 is directed to a method and apparatus for detecting base station transceivers malfunctions in a cellular telecommunications system. A Transceiver Malfunction Detector (TMD) receives and stores information related to the service performance of the BS transceivers and sorts the information on a per transceiver basis, for generating a service value for each transceiver. The TMD computes a service quality threshold value proportional to the average performance of the BS transceivers, and compares the service quality value of each monitored transceiver with the threshold, for determining the acceptability of the transceiver performance. The TMD also detects the cause of a malfunction in a transceiver, by assigning the frequencies used by an adequate transceiver to a transceiver suspected to be malfunctioning and by further monitoring the activity of the initially malfunctioning transceiver. When the transceiver persists malfunctioning after the frequency change, it is concluded that the malfunction is due to a hardware or software problem in the transceiver, while if the transceiver performance improves after the frequency change, it is concluded that the malfunction is due to a frequency interference.

GB 2 280 570 A describes a stand-by arrangement for a communication system. In order to mitigate problems caused by total or partial failure of a number of sectorised radio channel unit transceivers (RCU) in a base station of a particular cell of a radio communication system, base stations in adjacent cells increase the power transmitted from RCUs controlling sectors adjacent to that particular cell, thereby filling the gap in coverage left by the failure of that cell.

GB 2 277 234 A describes cellular radio telephone diagnostics. Base station transmitter test equipment comprises a subsidiary transceiver connected by a directional coupler to the main base station transceiver and to the antenna. Means are provided at the subsidiary transceiver for detecting the power deflected from the antenna as a method of testing it. In a further test arrangement a subsidiary receiver remote from the base station monitors the signal strength or timing of signals transmitted therefrom and reports a fault through a communications link to a central controller in the event of a change in the parameter being detected.

It is the object of the present invention to provide an improved method of detecting a cell outage of a radio cell.

The object of the present invention is achieved by a method of detecting an outage of a radio cell in a wireless telecommunication network comprising a plurality of radio cells and two or more base stations, each radio cell associated with a base station providing telecommunication service to at least one user terminal inside the radio cell, the method comprising: determining, by at least one of said base stations, for at least one of the radio cells associated with the at least one base station values of one or more RF-signal related parameters associated with at least one user terminal inside the at least one radio cell; providing, from the determined values of the one or more RF-signal related parameters, one or more indications corresponding to the one or more RF-signal related parameters; comparing said one or more indications with respective references; if an indication differs from the respective reference in excess of a predefined threshold, generating a respective trigger event; and indicating, dependent on one or more of said respective trigger events, that one or more neighbouring radio cells neighbouring the at least one radio cell associated with the at least one base station are affected by an outage, whereby the method further comprises determining, by the at least one base station, for the at least one radio cell associated with the at least one base station values of one or more of the following RF-signal related parameters: the channel quality indicator reported by the at least one user terminal inside the at least one radio cell; the timing advance allocated to the at least one user terminal inside the at least one radio cell; the available power headroom signalled by the at least one user terminal inside the at least one radio cell. The object of the present invention is further achieved by a base station for detecting an outage of a radio cell in a wireless telecommunication network comprising a plurality of radio cells, said base station, and one or more other base stations, each radio cell associated with one of said base stations providing telecommunication service to at least one user terminal inside the radio cell, the base station comprising a control unit adapted to determine for at least one of the radio cells associated with the base station values of one or more RF-signal related parameters associated with at least one user terminal inside the at least one radio cell, provide, from the determined values of the one or more RF-signal related parameters, one or more indications corresponding to the one or more RF-signal related parameters, compare said one or more indications with respective references, generate, if an indication differs from the respective reference in excess of a predefined threshold, a respective trigger event, and indicate, dependent on one or more of said respective trigger events, that one or more neighbouring radio cells neighbouring the at least one radio cell associated with the base station are affected by an outage, whereby the base station is further adapted to determine for the at least one radio cell associated with the base station values of one or more of the following RF-signal related parameters: the channel quality indicator reported by the at least one user terminal inside the at least one radio cell; the timing advance allocated to the at least one user terminal inside the at least one radio cell; the available power headroom signalled by the at least one user terminal inside the at least one radio cell.

A base station may serve one or more radio cells. A radio cell served by a base station is said to be associated with this base station. Every radio cell is associated with a base station, A user terminal located in a radio cell is provided with telecommunication service by the base station serving said radio cell. If the base station or a part of the base station (e.g. sector antenna) stops its service, e.g., due to a power outage, the radio cell associated with the base station or the part of the base station ceases to exist.

The wireless telecommunication network comprises at least two radio cells and at least two base stations. A radio cell associated with a first base station may have one or more neighbouring radio cells associated with one or more second base stations. Neighbouring radio cells adjoin, i.e., they are next to each other. The second base stations are called neighbouring/surrounding base stations with respect to the first base station.

The present invention allows a first base station neighbouring a second base station to detect an outage of a radio cell associated with the second base station and inform the OMC, possibly in addition to the second base station. Counteractions responding to a cell outage, e.g., an automatic adjustment of power settings, of the amount of available RACH resources, and of the orientation of base station antennas in terms of azimuth and elevation, can also be taken into account (RACH = Random Access Channel).

Therefore, a report of a cell outage towards the OMC is no longer dependent on the base station affected by the cell outage, only. Instead, also a base station neighbouring the affected base station may detect a cell outage of a radio cell associated with the affected base station and inform the OMC. This means that the detection of a cell outage is faster and more reliable.

In case of a total outage of a base station, e.g., due to electrical power outage, the OMC is informed by neighbouring base stations. An automatic adjustment of base station parameters and configuration, e.g., the orientation of the antennas, can be initiated to enhance the coverage in case an outage was detected by neighbouring base stations.

Thus, the present invention provides a better opportunity for the operator to maintain radio services in case of a cell outage, e.g., by a faster reaction time in advance of and instead of complaints of the subscribers.

The at least one base station determines for the at least one radio cell associated with the at least one base station values of one or more of the following RF-signal related parameters: the channel quality indicator (CQI) reported by the at least one user terminal inside the at least one radio cell, the timing advance (TA) allocated to the at least one user terminal inside the at least one radio cell, the available power headroom signalled by the at least one user terminal inside the at least one radio cell.

Further advantages are achieved by the embodiments of the invention indicated by the dependent claims.

According to a preferred embodiment of the invention, a deviation of the statistics of internal and external (UE information) values available in the base stations is used for the detection of a cell outage. From this deviation a base station can either deduce an enlargement of the size of one of its radio cells, or a rearrangement of its border towards other cells. In the first case, the base station can deduce that one of its neighbouring cells is in outage, although the base station does not know which of its neighbouring radio cells. In the second case, the base station can deduce that a certain neighbouring radio cell is in outage, i.e. the base station is able to identify the neighbouring radio cell in outage.

Convenient internal and external UE information values are:
- Channel Quality Information (CQI): During normal operation of the downlink, e.g., HSDPA and 3GPP LTE, the UEs are transmitting CQI values to the serving base station, to enable an optimised scheduling (HSDPA = High Speed Downlink Packet Access). The CQI value is mainly based on two effects: the distance (path loss) to the serving base station and the interference caused by other base stations. In the case of a cell outage the UEs previously located in the affected radio cell have to be served by the surrounding base stations leading to very low CQI values of such new UEs, as their distance to the serving base station is larger than in an error free scenario. On the other hand, already active UEs in the serving cell and in the vicinity of the outage cell will generate better, i.e. higher CQI values due to the better interference situation.
- Timing advance (TA): To enable a time synchronised reception of the individual uplink UE transmissions at the base station receiver, the base station has to allocate individually for each UE a Timing Adance value. In the case of a cell outage the surrounding base stations have to allocate a large TA to UEs previously located in the affected radio cell, i.e. the cell outage cell.
- Power Headroom: For up-link power control, the UE signals the available power headroom to the base station. During normal operation, the distribution of the UE power headroom of a cell has a characteristic shape which depends on the cell size and the radio transmission conditions. In case of outage of a neighbouring cell, UEs with bad channel conditions appear and the percentage of UEs with low headroom is increased accordingly.

According to a preferred embodiment of the invention, an analysis of the CQI values (B), the TA values (C), and the power headroom values (D) is performed:
(B) Each base station provides from the determined CQI values one or more indications corresponding to the CQI values. Preferably, each base station generates internally an indication of the CQI values reported by the UEs which are located in radio cells associated with the base station. The indication may be a distribution function, an average value, another statistical value, etc. In case of a cell outage, all UEs in the affected area that want to continue or to start a mobile service have to be served by other radio cells (from the same or other surrounding base stations) leading to low CQI values for such "new" UEs. As a consequence the indication changes, e.g., the shape of the CQI distribution function of new UEs will be shifted to lower values. On the other hand, the distribution of CQI values for already active UEs in the serving cell will contain better, i.e. higher CQI values due to the better interference situation in the vicinity of the outage cell. Dependent on a result of a comparison of CQI indications, e.g., CQI distribution functions, for "new" and "old" UEs with a respective reference, e.g., a CQI distribution function typical for a "normal" operation, the surrounding base stations may set a trigger "B". The term "normal" operation refers to the case where no radio cell of a base station and its neighbouring base stations is affected by an outage.
(C) Each base station provides from the determined TA values one or more indications corresponding to the TA values. Preferably, each base station generates internally an indication of the allocated TA values allocated individually to each UE. The indication may be a distribution function, an average value, another statistical value, etc. In case of a cell outage all UEs in the affected area that want to continue or to start a mobile service have to be served by other radio cells (from the same or other surrounding base stations) leading to high TA values. As a consequence the indication changes, e.g., the shape of the TA distribution function will be shifted to higher values. Dependent on a result of a comparison of a TA indication, e.g., a TA distribution function, with a reference, e.g., a TA distribution function typical for a "normal" operation, the surrounding base station may set a trigger "C".
(D) Each base station provides from the determined power headroom values one or more indications corresponding to the power headroom values. Preferably, each base station generates, for every associated radio cell, an indication of the power headroom of the UEs located in the radio cells associated with the base station. The indication may be a distribution function, an average value, another statistical value, etc. In case of a cell outage, all UEs located in the area of the affected radio cell that want to continue or to start a mobile service have to be served by other radio cells (associated with the same or other surrounding base stations). As a consequence the power headroom indication changes, e.g., the shape of the headroom distribution function will be shifted to lower values. Dependent on a result of a comparison of a power headroom indication, e.g., a power headroom distribution function, with a reference, e.g., a power headroom distribution function typical for a "normal" operation, the surrounding base station may set a trigger "D".

According to another preferred embodiment of the invention, at least one of said indications is provided by averaging the determined values of one of said RF-signal related parameters over a predefined time period. Preferably, a base station provides one of said indications by averaging the determined values of one of said RF-signal related parameters over a predefined time period. The predefined time period may be chosen from about several hundred milliseconds to several minutes.

According to another preferred embodiment of the invention, two or more of said indications are correlated to identify the one or more neighbouring radio cells affected by an outage. Preferably, the base station correlates two or more of said indications to identify the one or more neighbouring radio cells affected by an outage. Said correlation can mean that the base station uses a first indication in combination with a second indication to set limits to the location of a radio cell affected by an outage. By means of the correlation, the base station is able to identify the affected radio cell or an area where the affected radio cell is located. A correlation can be made between two or more indications gained from the same radio cell. It is also possible that a correlation is made between one or more indications gained from different radio cells.

In a preferred embodiment, topological data is provided wherein said topological data specifies neighbouring radio cells of said plurality of radio cells and/or neighbouring base stations of the wireless telecommunication network. The topological data specifies neighbour relationships among the base stations, preferably also among the radio cells of the wireless telecommunication network. The neighbour relationships may be included in neighbourhood information. Neighbourhood information is basically required for radio resource management, for self-configuration and self-optimisation of radio access networks, e.g. for coverage optimisation and interference co-ordination.

An optimisation of the neighbour lists by adding or removing of neighbour relations is sometimes required during runtime because the initial configuration often does not reflect real topological situation. The (updated) neighbourhood relations may be stored in the base station node the new radio cell(s) belongs to or in the neighbouring base stations/radio cells or in OMC databases.

Preferably, said topological data is provided by the network operator. From said topological data a list is generated, the list specifying the base stations neighbouring the at least one base station. Preferably, the list also specifies the radio cells neighbouring the at least one radio cell associated with the at least one base station. Preferably, said list is generated by the at least one base station. The at least one base station determines, for the at least one radio cell associated with the at least one base station, values of one or more of the RF-signal related parameters, whereby said values are associated with at least one user terminal inside the at least one radio cell associated with the at least one base station. At least one of said neighbouring base stations neighbouring the at least one base station determines, for at least one of the radio cells associated with the at least one neighbouring base station, values of one or more of the RF-signal related parameters, whereby said values are associated with at least one user terminal inside the at least one radio cell associated with the at least one neighbouring base station. The at least one base station provides, from the determined values of the one or more RF-signal related parameters, at least one indication associated with the at least one radio cell associated with the at least one base station. The at least one neighbouring base station provides, from the determined values of the one or more RF-signal related parameters, at least one indication associated with the at least one radio cell associated with the at least one neighbouring base station. The at least one base station compares the at least one indication provided by the at least one base station with respective references. The at least one neighbouring base station compares the at least one indication provided by the at least one neighbouring base station with respective references. If the at least one indication provided by the at least one base station differs from the respective reference in excess of a predefined threshold, the at least one base station generates a respective trigger event. If the at least one indication provided by the at least one neighbouring base station differs from the respective reference in excess of a predefined threshold, the at least one neighbouring base station generates a respective trigger event. The at least one base station indicates, dependent on one or more of said respective trigger events, that one or more neighbouring radio cells neighbouring the at least one radio cell associated with the at least one base station are affected by an outage. The at least one neighbouring base station indicates, dependent on one or more of said respective trigger events, that one or more neighbouring radio cells neighbouring the at least one radio cell associated with the at least one neighbouring base station are affected by an outage. Preferably, the at least one base station correlates said at least one indication provided by the at least one base station and said at least one indication provided by the at least one neighbouring base station, preferably in combination with said topological data, for identification of the one or more radio cells affected by an outage.

An advantage of this aforementioned preferred embodiment is that the information gathered by at least two different base stations is merged in the OMC or by communication among the base stations so that a better localisation of the radio cell affected by the outage is possible.

Preferably, the at least one base station receives said at least one indication provided by the at least one neighbouring base station via a communication connection between the at least one base station and the at least one neighbouring base station, e.g., a wire-line connection.

According to another preferred embodiment of the invention, a report is sent from the at least one base station to the OMC. Said report indicates that one or more neighbouring radio cells neighbouring the at least one radio cell associated with the at least one base station are affected by an outage. Preferably, the control unit of the base station generates the report, and the report is sent from the at least one base station to the OMC. By means of sending a report, a communication between a base station and the OMC is enabled.

According to another preferred embodiment of the invention, a report is sent from the at least one base station to at least one other base station. Said report indicates that one or more neighbouring radio cells neighbouring the at least one radio cell associated with the at least one base station are affected by an outage. Preferably, the control unit of the base station generates the report, and the report is sent from the at least one base station to at least one other base station. By means of sending a report, a communication among base stations is enabled.

Preferably, the step of indicating, dependent on one or more of said respective trigger events, that one or more neighbouring radio cells neighbouring the at least one radio cell associated with the at least one base station are affected by an outage comprises sending a report from the at least one base station to the OMC and/or to at least one other base station.

Preferably, the at least one base station monitors, for the at least one radio cell associated with the at least one base station, call control messages associated with at least one user terminal inside the at least one radio cell. From the monitored call control messages, one or more indications are provided. Call control messages comprise messages that are sent to control a telecommunication call, e.g., signalling data. A call control message comprises data that are not media data.

Preferably, the at least one base station monitors, for the at least one radio cell associated with the at least one base station, call control messages of one or more of the following types: random access attempts performed by the at least one user terminal inside the at least one radio cell; handover reports sent by the at least one user terminal inside the at least one radio cell.

Concerning these call control message types, the following is to note:
Random Access attempts: During normal operation the UEs are performing a Random Access procedure based on:
   - Initial access from RRC_IDLE;
   - Initial access after radio link failure;
   - Handover requiring Random Access procedure;
   - Adjustment of Timing Advance in case of "non-synchronised" UE

In the case of a cell outage the UEs will detect that the radio link is no longer available and will start the "radio link failure" procedure. In this case the UE will contact surrounding radio cells via the Random Access procedure. In 3GPP RAN2 it was decided that in LTE the UE in case of radio link failure will signal the old cell ID (i.e. the ID of cell affected by the outage) to the new radio cell, while for other radio access technologies the UE might not report the old cell ID.

Handover (HO): During mobility the UEs are moving from one radio cell to other radio cells by means of handover, which follows a specified HO procedure. In case of a cell outage, HO from the outage radio cell to surrounding cells of the same or other base stations will no longer occur. Additionally, no UE will leave the currently still active radio cells into the outage radio cell anymore. Normally the UEs report an "addition event" as soon as a new radio cell is within the reachability of the UE. In case of a cell outage, no UE in the still active cells will report the addition event of the outage cell any longer.

According to a preferred embodiment of the invention, an analysis of the random access attempts (A), and the HO processes (E) is performed:
(A) Each base station defines a mean number of Random Access attempts per a predefined time interval based on normal traffic behaviour. In the case of a cell outage all active UEs will carry out - after the timer(s) of the Radio Link Failure have expired - a Random Access towards the surrounding radio cell which now offers the best radio channel. Each UE timer(s) for the Radio Link Failure will probably have the same or at least similar values, as these are cell specific timer(s) which are defined by a Radio Resource Management (RRM) function of the serving base station. Therefore, a peak of Random Access attempts will occur in the surrounding radio cells shortly after the cell outage has occurred. If this peak is detected, i.e. the number of Random Access attempts abruptly increases above a certain level higher than the mean number (e.g. above 150 percent of the mean number of RACH access attempts), the surrounding base stations may set a trigger "A" that a cell outage in one or more of the surrounding radio cells has occurred. Therefore, in this preferred embodiment, an indication provided from the monitored random access messages is the number of Random Access attempts.

An extended trigger "A" includes a specification of the affected radio cell, e.g., a cell ID. It is possible that the UEs which are located in a radio cell affected by an outage, in case of a radio link failure, signal the "old" cell ID, i.e., the cell ID of the radio cell affected by the outage, when the UEs send a Random Access message. The "old" cell ID may be included in the a Random Access message. Thus, a base station receiving a Random Access message receives the "old" cell ID, too. If a base station notices a peak of Random Access attempts, the base station may deduce that a cell outage has occurred. If the Random Access messages associated with the Random Access attempts comprise the cell ID of the radio cell affected by the outage, the base station also knows in which radio cell the cell outage has occurred.
(E) Each base station generates based on the 3GPP handover procedure a list of surrounding radio cells. This list is based on the UE handover reports towards the base station of the source radio cell which include the cell ID of the target radio cell. In the case of cell outage the affected radio cell is no longer reported by the UEs, while other radio cells are still reported as possible handover target cells. Based on an appropriate filter (e.g., the time interval over which the handover reports are monitored) a cell outage can be detected. If a deviation of the list of reported handover target cells from a list of all surrounding radio cells is detected for a pre-defined time period, the surrounding base stations may set a trigger "E". Therefore, in this preferred embodiment, an indication provided from the monitored handover messages is the list of reported handover target cells and/or handover source cells.

The use of the RF-signal related parameters and the call control messages for detecting an outage of a radio cell makes use of the following relationships. Shortly after a cell outage, the random access attempts per time reach a peak in the radio cells surrounding/neighbouring the affected radio cell. In case of an outage of a radio cell, the channel quality information CQI decreases for UEs previously located in the affected radio cell, and increases for UEs in a neighbouring radio cell. In case of an outage of a radio cell, the timing advance TA must be increased (by the base station serving these UEs) for UEs previously located in the affected radio cell. With regard to the power headroom, the percentage of UEs with low power headroom is increased in case of an outage of a radio cell. The handover pattern in an affected radio cell and in its neighbouring radio cells changes in case of an outage of a radio cell.

The decision that a cell outage in a neighbouring cell has occurred can either be based on trigger values B and/or C and/or D, or a combination of the trigger values B to D. In this case only a report of a cell outage without detailed information about the cell ID can be generated towards the OMC.

According to a preferred embodiment, the decision that a cell outage in a neighbouring radio cell has occurred can either be based on trigger value A, with the supporting triggers B and/or C and/or D, or a combination of the trigger values A to D. In this case only a report of a cell outage without detailed information about the cell ID may be generated towards the OMC.

With the extended trigger A and/or the trigger E, the affected radio cell can be identified and a report containing, e.g., the cell ID of the affected radio cell can be generated and sent to the OMC. Again a combination of trigger E together with A and/or B and/or C or a combination of the trigger values A to E may initiate a generation of the message to the OMC

The mean number of Random Access attempts per interval (trigger A), and the triggers B, C, D may be based on mean values defined on, e.g., daily basis or on configurable intervals (e.g. 07:00h to 08:00h, 08:00h to 9:00h, etc.).

Preferably, the base station analysing the more RF-signal related parameters and/or the call control messages may use mathematical algorithms specific for analysing and correlating the statistical behaviour. The application of the algorithm may result in a correlation coefficient which is a measure for a similarity of two data sets.

For a decentralised OMC approach, the report with the cell ID of the affected radio cell will be sent to other surrounding cells.

Preferably, parameters and configurations of one or more of the base stations of the network are adjusted if an outage has been detected.

These as well as further features and advantages of the invention will be better appreciated by reading the following detailed description of presently preferred exemplary embodiments taken in conjunction with accompanying drawings of which:
- Fig. 1: shows a block diagram of a wireless telecommunication network according to an embodiment of the invention;
- Fig. 2: shows a block diagram of the wireless telecommunication network of Fig. 1 when a radio cell is affected by an outage; and
- Fig. 3: shows a base station according to an embodiment of the invention serving user terminals; and
- Fig. 4: shows a diagram of two CQI distributions.

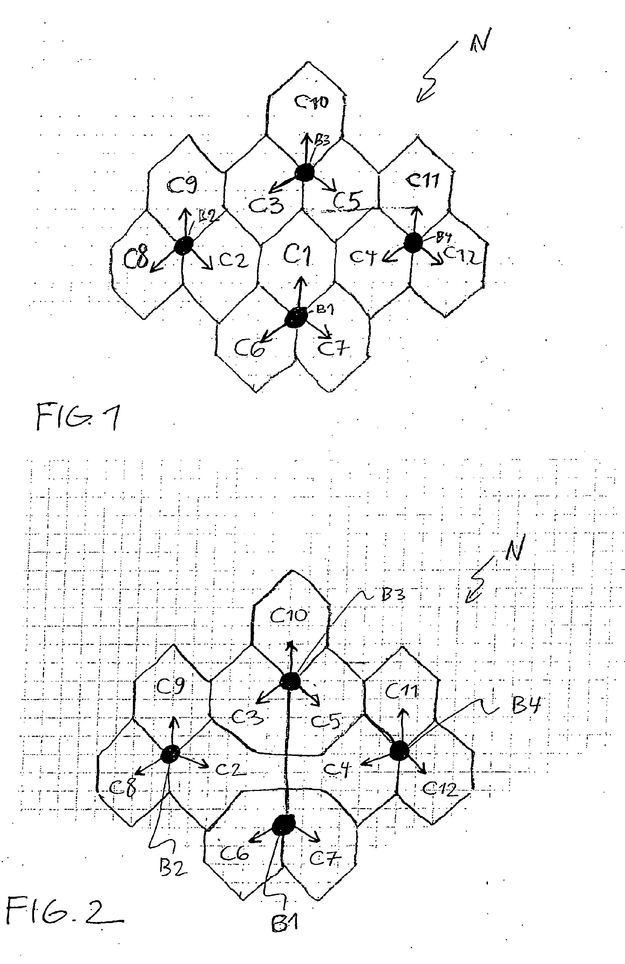

Fig. 1 shows a wireless telecommunication network 1, e.g., a UMTS LTE network, comprising four base stations B1 to B4. The base stations B1 to B4 may be a LTE eNB. Each of the base stations B1 to B4 has three antennas. Each of these antennas covers a sector forming one of the radio cells C1 to C12.

The three antennas of base station B1 serve the three radio cells C1, C6, and C7. The three antennas of base station B2 serve the three radio cells C2, C8, and C9. The three antennas of base station B3 serve the three radio cells C3, C5, and C10. The three antennas of base station B4 serve the three radio cells C4, C11, and C12.

Users with user terminals may move about the wireless telecommunication network N. A user terminal located in the area of a radio cell is served by the associated base station. For example, a user terminal located in the area of the radio cell C1 will be served by the upper antenna of base station B1.

Let us assume that the upper antenna of base station B1 suffers damages so that the corresponding radio cell C1 is affected by an outage. The radio cell C1 ceases to exist. The user terminals located in the area of the former radio cell C1 have to be served by radio cells neighbouring the former radio cell C1. Accordingly, the areas of the radio cells C2 to C7 neighbouring the former radio cell C1 increase.

Fig. 2 shows a state of the wireless telecommunication network 1 when the radio cells C2 to C7 have segmented the area of the former radio cell C1 among them.

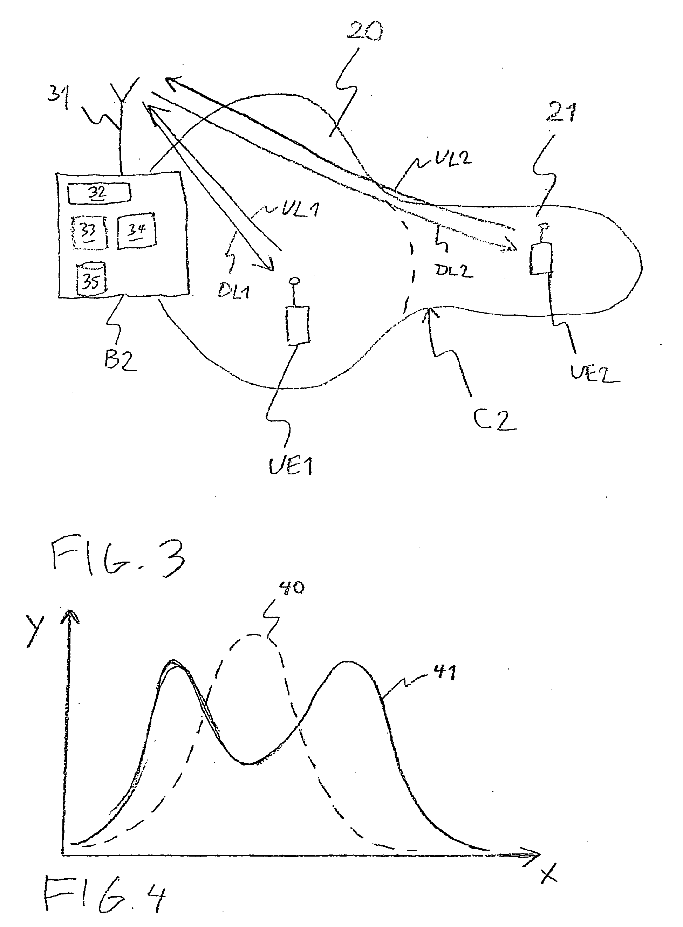

Fig. 3 shows the base station B2 and its associated, extended radio cell C2 after a part of the area of the affected radio cell C1 has been integrated into the radio cell C2. The area of the extended radio cell C2 shown in Fig. 3 corresponds to the area of the radio cell C2 shown in Fig. 2. For simplification, it is assumed that the extended radio cell C2 comprises an original area 20 and an additional area 21. Under realistic conditions, the original area 20 - and the additional area 21 - may dynamically change (increase or decrease), e.g., dependent on the workload of its associated base station or the workload of neighbouring base stations.

The original area 20 corresponds to the area of the radio cell C2 shown in Fig. 1. For simplification, it is assumed that the additional area 21 is a part of the area of the former radio cell C1. Generally, the additional area 21 may consist from one or more parts of one or more other cells.

The base station B2 serving the extended radio cell C2 comprises an radio air interface 31, e.g., an antenna, a transceiver unit 32, a control unit 33, a CPU 34, and a storage unit 35 (CPU = Central Processing Unit). The base station B2 is composed of one or several inter-linked computers, i.e., a hardware platform, a software platform basing on the hardware platform and several application programs executed by the system platform formed by the software and hardware platform. The functionality of the base station B2 are provided by the execution of these application programs. The application programs or a selected part of these application programs constitute a computer software product providing a call control service as described in the following, when executed on the system platform. Further, such computer software product is constituted by a storage medium storing these application programs or said selected part of application programs.

The base station B2 provides telecommunication service to two user terminals UE1, UE2 inside the radio cell C2. A first user terminal UE1 is located in the original area 20, and a second user terminal UE2 is located in the additional area 21. The first user terminal UE1 exchanges data information with the base station B2 via a radio air interface downlink connection DL1 and an uplink connection UL1. The second user terminal UE2 exchanges data information with the base station B2 via a radio air interface downlink connection DL2 and an uplink connection UL2.The distance between the base station B2 and the second user terminal UE2 is greater than the distance between the base station B2 and the first user terminal UE1. Because of the increased distance, the second user terminal UE2 transmits very low CQI values. On the other hand, the already active user terminal UE1 in the serving cell C2 generates better, i.e. higher CQI values due to the better interference situation.

The base station B2 receives the CQI values from the two user terminals UE1, UE2 over a certain time interval. The control unit 33 provides, from the determined CQI values of the two user terminals UE1, UE2, an indication corresponding to the CQI values. The indication may comprise a distribution function of the CQI values. The control unit 33 compares said indication, e.g., the CQI distribution function with a respective reference, e.g., a reference CQI distribution function.

Fig. 4 shows a x-y-diagram of a CQI distribution. The CQI values increase along the positive x-axis. The amount/frequency of a certain CQI value increases along the positive y-axis. A reference CQI distribution 40 characterising a state of the network N where no radio cell neighbouring the base station B2 has an outage shows one central peak, while a current CQI distribution 41 shows two peaks which are offset from the central peak of the reference CQI distribution 40. After the outage of the cell C1, the second user terminal UE2 located in the additional area 21 reports lower CQI values while the user terminal UE1 located in the original area 20 reports higher CQI values. Therefore, the reference CQI distribution 40 is changed into the two-peaked CQI distribution 41.

If the CQI distribution function 41 differs from the respective CQI reference distribution function in excess of a predefined threshold, the control unit 33 generates a trigger event. Triggered by said trigger event, the control unit 33 indicates, preferably to the OMC, that one or more of the neighbouring radio cells C1, C3, C6 neighbouring the at least one radio cell C2 associated with the base station B2 are affected by an outage.

## Claims

1. A method of detecting an outage of a radio cell (C1) in a wireless telecommunication network (N) comprising a plurality of radio cells (C1 to C12) and two or more base stations (B1 to B4), each radio cell (C1 to C12) associated with a base station (B1 to B4) providing telecommunication service to at least one user terminal (UE1, UE2) inside the radio cell (C1 to C12), the method comprising:
determining, by at least one of said base stations (B1 to B4), for at least one of the radio cells (C1 to C12) associated with the at least one base station (B1 to B4) values of one or more RF-signal related parameters associated with at least one user terminal (UE1, UE2) inside the at least one radio cell;
providing, from the determined values of the one or more RF-signal related parameters, one or more indications corresponding to the one or
more RF-signal related parameters;
comparing said one or more indications with respective references;
if an indication differs from the respective reference in excess of a predefined threshold, generating a respective trigger event; and
indicating, dependent on one or more of said respective trigger events,
that one or more neighbouring radio cells (C1) neighbouring the at least one radio cell associated with the at least one base station (B1 to B4) are affected by an outage,
**characterised in**
**that** the method further comprises:
determining, by the at least one base station (B1 to B4), for the at least one radio cell associated with the at least one base station (B1 to B4) values of one or more of the following RF-signal related parameters:
• the channel quality indicator reported by the at least one user terminal (UE1, UE2) inside the at least one radio cell;
• the timing advance allocated to the at least one user terminal (UE1, UE2) inside the at least one radio cell;
• the available power headroom signalled by the at least one user terminal (UE1, UE2) inside the at least one radio cell.

2. The method of claim 1,
**characterised in**
**that** the method further comprises:
providing one of said indications by averaging the determined values of one of said RF-signal related parameters over a predefined time period.

3. The method of claim 1,
**characterised in**
**that** the method further comprises:
correlating two or more of said indications of a single radio cell and/or different radio cells (C1 to C12) to identify the one or more neighbouring radio cells affected by an outage.

4. The method of claim 1,
**characterised in**
**that** the method further comprises:
providing topological data specifying neighbouring base stations of the wireless telecommunication network (N);
generating from said topological data, by the at least one base station (B1 to B4), a list of base stations neighbouring the at least one base station;
determining, by the at least one base station, for the at least one radio cell (C1 to C12) associated with the at least one base station values of one or more of the RF-signal related parameters associated with at least one user terminal (UE1, UE2) inside the at least one radio cell associated with the at least one base station;
determining, by at least one of said neighbouring base stations, for at least one of the radio cells (C1 to C12) associated with the at least one neighbouring base station values of one or more of the RF-signal related parameters associated with at least one user terminal inside the at least one radio cell associated with the at least one neighbouring base station;
providing, by the at least one base station and the at least one neighbouring base station, from the determined values of the one or
more RF-signal related parameters at least one indication associated with the at least one radio cell associated with the at least one base station and at least one indication associated with the at least one radio cell associated with the at least one neighbouring base station;
comparing said at least two indications with respective references; and correlating said at least two indications for identification of the one or more neighbouring radio cells affected by an outage.

5. The method of claim 1,
**characterised in**
**that** the method further comprises the steps of:
sending a report to an OMC that one or more neighbouring radio cells neighbouring the at least one radio cell associated with the at least one base station (B1 to B4) are affected by an outage.

6. The method of claim 1,
**characterised in**
**that** the method further comprises the steps of:
sending a report to at least one other base station that one or more neighbouring radio cells neighbouring the at least one radio cell associated with the at least one base station (B1 to B4) are affected by an outage.

7. The method of claim 1,
**characterised in**
**that** the method further comprises the steps of:
monitoring, by the at least one base station (B1 to B4), call control messages associated with at least one of the user terminals (UE1, UE2); and
providing, from the monitored call control messages, one or more indications.

8. The method of claim 7,
**characterised in**
**that** the method further comprises:
monitoring, by the at least one base station (B1 to B4), call control messages of one or more of the following types:
• a random access attempt performed by the at least one user terminal (UE1, UE2);
• a handover report sent by the at least one user terminal (UE1, UE2);

9. The method of claim 1,
**characterised in**
**that** the method further comprises:
adjusting parameters and configurations of one or more of the base stations of the network if the outage of the radio cell has been detected,

10. A base station (B1 to B4) for detecting an outage of a radio cell (C1) in a wireless telecommunication network (N) comprising a plurality of radio cells (C1 to C12), said base station (B1 to B4), and one or more other base stations (B1 to B4), each radio cell (C1 to C12) associated with a base station (B1 to B4) providing telecommunication service to at least one user terminal (UE1, UE2) inside the radio cell (C1 to C12), the base station (B1 to B4) comprising a control unit adapted to determine for at least one (C2 to C7) of the radio cells (C1 to C12) associated with the base station (B1 to B4) values of one or more RF-signal related parameters associated with at least one user terminal (UE1, UE2) inside the at least one radio cell (C2 to C7); provide, from the determined values of the one or more RF-signal related parameters, one or more indications corresponding to the one or more RF-signal related parameters; compare said one or more indications with respective references; if an indication differs from the respective reference in excess of a predefined threshold, generate a respective trigger event; and indicate, dependent on one or more of said respective trigger events, that one or more neighbouring radio cells (C1) neighbouring the at least one radio cell (C2 to C7) associated with the base station (B1 to B4) are affected by an outage, **characterised in**
**that** the base station (B1 to B4) is further adapted to determine for the at least one radio cell associated with the base station (B1 to B4) values of one or more of the following RF-signal related parameters:
• the channel quality indicator reported by the at least one user terminal (UE1, UE2) inside the at least one radio cell;
• the timing advance allocated to the at least one user terminal (UE1, UE2) inside the at least one radio cell;
• the available power headroom signalled by the at least one user terminal (UE1, UE2) inside the at least one radio cell.

## Patentansprüche

1. Verfahren zum Erkennen eines Ausfalls einer Funkzelle (C1) in einem drahtlosen Telekommunikationsnetzwerk (N) mit einer Vielzahl von Funkzellen (C1 bis C12) und zwei oder mehr Basisstationen (B1 bis B4), wobei jede mit einer Basisstation (B1 bis B4) assoziierte Funkzelle (C1 bis C12) einen Telekommunikationsdienst an mindestens ein Benutzerendgerät (UE1, UE2) innerhalb der Funkzelle (C1 bis C12) bereitstellt, wobei das Verfahren umfasst:
Ermitteln, durch mindestens eine der besagten Basisstationen (B1 bis B4), für mindestens eine der mit der mindestens einen Basisstation (B1 bis B4) assoziierten Funkzellen (C1 bis C12), der Werte eines oder mehrerer der mit dem mindestens einen Benutzerendgerät (UE1, UE2) innerhalb der mindestens einen Funkzelle assoziierten auf das HF-Signal bezogenen Parameter;
Bereitstellen, aus den ermittelten Werten des einen oder der mehreren auf das HF-Signal bezogenen Parameter, einer oder mehrerer dem einen oder den mehreren der auf das HF-Signal bezogenen Parametern entsprechenden Angaben;
Vergleichen der besagten einen oder mehreren Angaben mit entsprechenden Referenzen;
wenn eine Angabe über einen vorgegebenen Grenzwert hinaus von der entsprechenden Referenz abweicht, Erzeugen eines entsprechenden Trigger-Ereignisses; und
Angeben, in Abhängigkeit von einem oder mehreren der besagten entsprechenden Trigger-Ereignisse, dass eine oder mehrere benachbarte Funkzellen (C1), welche mit der mit der mindestens einen Basisstation (B1 bis B4) assoziierten mindestens einen Funkzelle benachbart sind, von einem Ausfall betroffen sind,
**dadurch gekennzeichnet,**
**dass** das Verfahren weiterhin umfasst:
Ermitteln, durch die mindestens eine Basisstation (B1 bis B4), für die mindestens eine mit der mindestens einen Basisstation (B1 bis B4) assoziierte Funkzelle, der Werte eines oder mehrerer der folgenden auf das RF-Signal bezogenen Parameter:
• der von dem mindestens einen Benutzerendgerät (UE1, UE2) innerhalb der mindestens einen Funkzelle gemeldete Kanalqualitätsindikator;
• der dem mindestens einen Benutzerendgerät (UE1, UE2) innerhalb der mindestens einen Funkzelle zugewiesene Timing-Advance-Wert;
• der von dem mindestens einen Benutzerendgerät (UE1, UE2) innerhalb der mindestens einen Funkzelle signalisierte verfügbare Leistungsfreiraum.

2. Verfahren nach Anspruch 1,
**dadurch gekennzeichnet,**
**dass** das Verfahren weiterhin umfasst:
Bereitstellen einer der besagten Angaben durch Mitteln der ermittelten Werte eines der besagten auf das HF-Signal bezogenen Parameter über einen vordefinierten Zeitraum hinweg.

3. Verfahren nach Anspruch 1,
**dadurch gekennzeichnet,**
**dass** das Verfahren weiterhin umfasst:
Korrelieren von zwei oder mehr der besagten Angaben einer einzelnen Funkzelle und/oder verschiedener Funkzellen (C1 bis C12), um die eine oder mehrere von dem Ausfall betroffene benachbarten Funkzellen zu identifizieren.

4. Verfahren nach Anspruch 1,
**dadurch gekennzeichnet,**
**dass** das Verfahren weiterhin umfasst:
Bereitstellen von topologischen Daten, welche benachbarte Basisstationen des drahtlosen Telekommunikationsnetzwerks (N) spezifizieren;
Erzeugen, durch die mindestens eine Basisstation (B1 bis B4), einer Liste der mit der mindestens einen Basisstation benachbarten Basisstationen aus den besagten topologischen Daten;
Ermitteln, durch die mindestens eine Basisstation, für die mindestens eine mit der mindestens einen Basisstation assoziierte Funkzelle (C1 bis C12), von Werten eines oder mehrerer der mit mindestens einem Benutzergerät (UE1, UE2) assoziierten auf das HF-Signal bezogenen Parameter innerhalb der mindestens einen mit der mindestens einen Basisstation assoziierten Funkzelle;
Ermitteln, durch die mindestens eine der besagten benachbarten Basisstationen,
für mindestens eine der mit der mindestens einen benachbarten Basisstation assoziierten Funkzellen (C1 bis C12), von Werten des einen oder mehrerer der mit dem mindestens einen Benutzerendgerät assoziierten auf das RF-Signal bezogenen Parameter innerhalb der mindestens einen mit der mindestens einen benachbarten Basisstation assoziierten Funkzelle;
Bereitstellen, durch die mindestens eine Basisstation und die mindestens eine benachbarte Basisstation, aus den ermittelten Werten des einen oder mehrerer der auf das HF-Signal bezogenen Parameter, mindestens einer mit der mindestens einen Funkzelle, welche mit der mindestens einen Basisstation assoziiert ist,
assoziierten Angabe und mindestens einer mit der mindestens einen Funkzelle,
welche mit der mindestens einen benachbarten Basisstation assoziiert ist, assoziierten Angabe;
Vergleichen der besagten mindestens zwei Angaben mit entsprechenden Referenzen; und
Korrelieren der besagten mindestens zwei Angaben, um eine oder mehrere von einem Ausfall betroffene benachbarte Funkzellen zu identifizieren.

5. Verfahren nach Anspruch 1,
**dadurch gekennzeichnet,**
**dass** das Verfahren weiterhin die folgenden Schritte umfasst:
Senden einer Meldung an eine OMC darüber, dass eine oder mehrere benachbarte Funkzellen, welche mit der mindestens einen mit der mindestens einen Basisstation (B1 bis B4) benachbarten Funkzelle benachbart sind, von einem Ausfall betroffen sind.

6. Verfahren nach Anspruch 1,
**dadurch gekennzeichnet,**
**dass** das Verfahren weiterhin die folgenden Schritte umfasst:
Senden einer Mitteilung an mindestens eine andere Basisstation darüber, dass eine oder mehrere benachbarte Funkzellen, welche mit der mindestens einen mit der mindestens einen Basisstation (B1 bis B4) benachbarten Funkzelle benachbart sind, von einem Ausfall betroffen sind.

7. Verfahren nach Anspruch 1,
**dadurch gekennzeichnet,**
**dass** das Verfahren weiterhin die folgenden Schritte umfasst:
Überwachen, durch die mindestens eine Basisstation (B1 bis B4), von mit mindestens einem der Benutzerendgeräte (UE1, UE2) assoziierten Rufsteuerungsnachrichten; und
Bereitstellen, aus den überwachten Rufsteuerungsnachrichten, einer oder mehrerer Angaben.

8. Verfahren nach Anspruch 7,
**dadurch gekennzeichnet,**
**dass** das Verfahren weiterhin umfasst:
Überwachen, durch die mindestens eine Basisstation (B1 bis B4), von Rufsteuerungsnachrichten eines oder mehrerer der folgenden Typen:
• Ein Random-Access-Versuch, durchgeführt von dem mindestens einen Benutzerendgerät (UE1, UE2);
• eine Handover-Mitteilung, gesendet durch das mindestens eine Benutzerendgerät (UE1, UE2).

9. Verfahren nach Anspruch 1,
**dadurch gekennzeichnet,**
**dass** das Verfahren weiterhin umfasst:
Anpassen der Parameter und Konfigurationen einer oder mehrerer Basisstationen des Netzwerks, wenn der Ausfall der Funkzelle erkannt wurde.

10. Basisstation (B1 bis B4) zum Erkennen eines Ausfalls einer Funkzelle (C1) in einem drahtlosen Telekommunikationsnetzwerk (N) mit einer Vielzahl von Funkzellen (C1 bis C12), der besagten Basisstation (B1 bis B4), und einer oder mehreren anderen Basisstationen (B1 bis B4), wobei jede mit einer Basisstation (B1 bis B4) assoziierte Funkzelle (C1 bis C12) einen Telekommunikationsdienst an mindestens ein Benutzerendgerät (UE1, UE2) innerhalb der Funkzelle (C1 bis C12) bereitstellt, wobei die Basisstation (B1 bis B4) eine Steuerungseinheit umfasst, welche dazu ausgelegt ist, für mindestens eine (C2 bis C7) der mit der Basisstation (B1 bis B4) assoziierten Funkzellen (C1 bis C12) die Werte eines oder mehrerer der mit dem mindestens einen Benutzerendgerät (UE1, UE2) innerhalb der mindestens einen Funkzelle (C2 bis C7) assoziierten auf das HF-Signal bezogenen Parameter zu ermitteln; aus den ermittelten Werten des einen oder der mehreren auf das HF-Signal bezogenen Parameter, eine oder mehrere dem einen oder den mehreren der auf das HF-Signal bezogenen Parametern entsprechenden Angaben bereitzustellen; die besagte eine oder die besagten mehreren Angaben mit entsprechenden Referenzen zu vergleichen; wenn eine Angabe über einen vorgegebenen Grenzwert hinaus von der entsprechenden Referenz abweicht, ein entsprechendes Trigger-Ereignis zu erzeugen; und in Abhängigkeit von einem oder mehreren der besagten entsprechenden Trigger-Ereignisse anzugeben, dass eine oder mehrere benachbarte Funkzellen (C1), welche mit der mit der mindestens einen Basisstation (B1 bis B4) assoziierten mindestens einen Funkzelle benachbart sind, von einem Ausfall betroffen sind,
**dadurch gekennzeichnet,**
**dass** die Basisstation (B1 bis B4) weiterhin dazu ausgelegt ist, für die mindestens eine mit der mindestens einen Basisstation (B1 bis B4) assoziierte Funkzelle die Werte eines oder mehrerer der folgenden auf das RF-Signal bezogenen Parameter zu ermitteln:
• der von dem mindestens einen Benutzerendgerät (UE1, UE2) innerhalb der mindestens einen Funkzelle gemeldete Kanalqualitätsindikator;
• der dem mindestens einen Benutzerendgerät (UE1, UE2) innerhalb der mindestens einen Funkzelle zugewiesene Timing-Advance-Wert;
• der von dem mindestens einen Benutzerendgerät (UE1, UE2) innerhalb der mindestens einen Funkzelle signalisierte verfügbare Leistungsfreiraum.

## Revendications

1. Procédé de détection d'une interruption d'une cellule radio (C1) dans un réseau de télécommunication sans fil (N) comprenant une pluralité de cellules radio (C1 à C12) et au moins deux stations de base (B1 à B4), chaque cellule radio (C1 à C12) associée à une station de base (B1 à B4) fournissant un service de télécommunication à au moins un terminal utilisateur (UE1, UE2) à l'intérieur de la cellule radio (C1 à C12), le procédé comprenant les étapes suivantes :
déterminer, au moyen d'au moins une desdites stations de base (B1 à B4), pour au moins une des cellules radio (C1 à C12) associées à l'au moins une station de base (B1 à B4) des valeurs d'un ou de plusieurs paramètres relatifs au signal RF associés à au moins un terminal utilisateur (UE1, UE2) à l'intérieur de l'au moins une cellule radio ;
fournir, à partir des valeurs déterminées du ou des paramètres relatifs au signal RF, une ou plusieurs indications correspondant au(x) paramètre(s) relatif(s) au signal RF ;
comparer ladite ou lesdites indications avec des références respectives ; si une indication diffère de la référence respective au-delà d'un seuil prédéfini, générer un événement déclencheur respectif ; et indiquer, en fonction d'un ou de plusieurs desdits événements déclencheurs respectifs, qu'une ou plusieurs cellules radio (C1) voisines à proximité de l'au moins une cellule radio associée à l'au moins une station de base (B1 à B4) sont affectées par une interruption.
**caractérisé en ce que**
le procédé comprend en outre les étapes suivantes :
déterminer, au moyen de l'au moins une station de base (B1 à B4), pour l'au moins une cellule radio associée à l'au moins une station de base (B1 à B4), des valeurs d'un ou de plusieurs des paramètres relatifs au signal RF suivants :
• l'indicateur de qualité du canal rapporté par l'au moins un terminal utilisateur (UE1, UE2) à l'intérieur de l'au moins une cellule radio ;
• l'avance temporelle attribuée à l'au moins un terminal utilisateur (UE1, UE2) à l'intérieur de l'au moins une cellule radio ;
• la marge de puissance disponible signalée par l'au moins un terminal utilisateur (UE1, UE2) à l'intérieur de l'au moins une cellule radio.

2. Procédé selon la revendication 1,
**caractérisé en ce que**
le procédé comprend en outre l'étape suivante :
fournir une desdites indications en calculant la moyenne des valeurs déterminées d'un desdits paramètres relatifs au signal RF au cours d'une période prédéfinie.

3. Procédé selon la revendication 1,
**caractérisé en ce que** le procédé comprend en outre l'étape suivante :
corréler au moins deux desdites indications d'une seule cellule radio et/ou de cellules radio différentes (C1 à C12) pour identifier la ou les cellules radio voisines affectées par une interruption.

4. Procédé selon la revendication 1,
**caractérisé en ce que**
le procédé comprend en outre les étapes suivantes :
fournir des données topologiques spécifiant des stations de base voisines du réseau de télécommunication sans fil (N) ;
générer à partir desdites données topologiques, au moyen de l'au moins une station de base (B1 à B4), une liste de stations de base à proximité de l'au moins une station de base ;
déterminer, au moyen de l'au moins une station de base, pour l'au moins une cellule radio (C1 à C12) associée à l'au moins une station de base, des valeurs d'un ou de plusieurs des paramètres relatifs au signal RF associés à au moins un terminal utilisateur (UE1, UE2) à l'intérieur de l'au moins une cellule radio associée à l'au moins une station de base ;
déterminer, au moyen d'au moins une desdites stations de base voisines, pour au moins une des cellules radio (C1 à C12) associées à l'au moins une station de base voisine, des valeurs d'un ou de plusieurs des paramètres relatifs au signal RF associés à au moins un terminal utilisateur à l'intérieur de l'au moins une cellule radio associée à l'au moins une station de base voisine ;
fournir, au moyen de l'au moins une station de base et de l'au moins une station de base voisine, à partir des valeurs déterminées du ou des paramètres relatifs au signal RF, au moins une indication associée à l'au moins une cellule radio associée à l'au moins une station de base et au moins une indication associée à l'au moins une cellule radio associée à l'au moins une station de base voisine ;
comparer lesdites au moins deux indications avec des références respectives ; et
corréler lesdites au moins deux indications pour l'identification de la ou des cellule(s) radio voisine(s) affectée(s) par une interruption.

5. Procédé selon la revendication 1,
**caractérisé en ce que**
le procédé comprend en outre l'étape suivante :
envoyer un rapport à un OMC selon lequel une ou plusieurs cellules radio voisines, à proximité de l'au moins une cellule radio associée à l'au moins une station de base (B1 à B4), sont affectées par une interruption.

6. Procédé selon la revendication 1,
**caractérisé en ce que**
le procédé comprend en outre l'étape suivante :
envoyer un rapport à au moins une autre station de base selon lequel une ou
plusieurs cellules radio voisines, à proximité de l'au moins une cellule radio associée à l'au moins une station de base (B1 à B4), sont affectées par une interruption.

7. Procédé selon la revendication 1,
**caractérisé en ce que**
le procédé comprend en outre les étapes suivantes :
surveiller, au moyen de l'au moins une station de base (B1 à B4), des messages de contrôle d'appel associés à au moins un des terminaux utilisateur (UE1, UE2) ;
et
fournir, à partir des messages de contrôle d'appel surveillés, une ou plusieurs indications.

8. Procédé selon la revendication 7,
**caractérisé en ce que**
le procédé comprend en outre l'étape suivante :
surveiller, au moyen de l'au moins une station de base (B1 à B4), des messages de contrôle d'appel d'un ou de plusieurs des types suivants :
• une tentative d'accès aléatoire effectuée par l'au moins un terminal utilisateur (UE1, UE2) ;
• un rapport de transfert envoyé par l'au moins un terminal utilisateur (UE1, UE2).

9. Procédé selon la revendication 1,
**caractérisé en ce que**
le procédé comprend en outre l'étape suivante :
régler des paramètres et des configurations d'une ou de plusieurs des stations de base du réseau si l'interruption de la cellule radio a été détectée.

10. Station de base (B1 à B4) pour détecter une interruption d'une cellule radio (C1) dans un réseau de télécommunication sans fil (N) comprenant une pluralité de cellules radio (C1 à C12), ladite station de base (B1 à B4), et une ou plusieurs autres stations de base (B1 à B4), chaque cellule radio (C1 à C12) associée à une station de base (B1 à B4) fournissant un service de télécommunication à au moins un terminal utilisateur (UE1, UE2) à l'intérieur de la cellule radio (C1 à C12), la station de base (B1 à B4) comprenant une unité de commande adaptée pour déterminer, pour au moins une (C2 à C7) des cellules radio (C1 à C12) associées à la station de base (B1 à B4), des valeurs d'un ou de plusieurs paramètres relatifs au signal RF associés à au moins un terminal utilisateur (UE1, UE2) à l'intérieur de l'au moins une cellule radio (C2 à C7) ; fournir, à partir des valeurs déterminées du ou des paramètres relatifs au signal RF, une ou plusieurs indications correspondant au(x) paramètre(s) relatif(s) au signal RF ; comparer ladite ou lesdites indications avec des références respectives ; si une indication diffère de la référence respective au-delà d'un seuil prédéfini, générer un événement déclencheur respectif ; et indiquer, en fonction d'un ou de plusieurs desdits événements déclencheurs respectifs, qu'une ou plusieurs cellules radio (C1) voisines à proximité de l'au moins une cellule radio (C2 à C7) associée à la station de base (B1 à B4) sont affectées par une interruption,
**caractérisé en ce que**
la station de base (B1 à B4) est en outre adaptée pour déterminer pour l'au moins une cellule radio associée à la station de base (B1 à B4) des valeurs d'un ou de plusieurs des paramètres relatifs au signal RF suivants :
• l'indicateur de qualité du canal rapporté par l'au moins un terminal utilisateur (UE1, UE2) à l'intérieur de l'au moins une cellule radio ;
• l'avance temporelle attribuée à l'au moins un terminal utilisateur (UE1, UE2) à l'intérieur de l'au moins une cellule radio ;
• la marge de puissance disponible signalée par l'au moins un terminal utilisateur (UE1, UE2) à l'intérieur de l'au moins une cellule radio.
